# EUROPEAN PATENT APPLICATION

(11) **EP 4 741 751 A1**
(43) Date of publication of application: **13.05.2026**
(21) Application number: 25196152.0
(22) Date of filing: 15.08.2025
(51) Int. Cl.: F28D 15/02, F28D 15/04, F28F 3/04, F28F 3/12, H01M 10/613, H01M 50/209, H01M 10/6567, H01M 10/6556, H01M 10/6554, H01M 10/647, H01M 10/625

(54) **HEAT SPREADERS, BATTERIES AND BATTERY PACKS**

(30) Priority: 06.11.2024 CN 202422709764 U; 19.02.2025 WO PCT/CN2025/078023
(71) Applicant: Eve Power Co., Ltd., Jingmen, Hubei 448000 (CN)
(72) Inventor: GUO, Jiahao, Jingmen, Hubei, 448000 (CN); SUN, Fei, Jingmen, Hubei, 448000 (CN); TAN, Xianyang, Jingmen, Hubei, 448000 (CN); LEI, Yu, Jingmen, Hubei, 448000 (CN); GAN, Junchong, Jingmen, Hubei, 448000 (CN); YUAN, Dingding, Jingmen, Hubei, 448000 (CN); CHEN, Jiujiang, Jingmen, Hubei, 448000 (CN)
(74) Representative: Berggren Oy

(57) **Abstract**

A heat spreader includes a first plate, a second plate and a plurality of protrusions. The first plate is configured to fit against at least one side surface of a cell. The second plate is hermetically connected to the first plate to form an enclosed space filled with a liquid medium. The protrusions are disposed between the first plate and the second plate and dispersedly arranged in the enclosed space. Some of the protrusions are arranged at intervals in a first direction to form a protrusion group, and two parts of the protrusions respectively belonging to two adjacent protrusion groups are at least partially staggered in a second direction different from the first direction.

## Description

### TECHNICAL FIELD

The present application relates to battery heat dissipation technologies, and in particular to heat spreaders, batteries and battery packs.

### BACKGROUND

Lithium-ion batteries widely used in new energy vehicles, especially pure electric vehicles, need to meet the requirements of high energy density and high power density, which pose severe challenges to the thermal management of large power battery packs. For a popular battery cell with a square housing, a water cooling plate may be provided at the bottom of the cell for heat dissipation. However, this manner has limitations such as small heat dissipation area and large temperature difference between cells, and thus it is difficult to meet the heat dissipation requirements of higher energy density batteries and higher charge and discharge rate conditions in the future.

On the other hand, a heat spreader may be provided to balance the temperature of the battery. Copper columns may be disposed between upper and lower copper sheets of the heat spreader for support. When the heat is transferred from the heat source to the evaporation area, the coolant in the cavity begins to vaporize, after being heated in a low vacuum environment, to absorb the heat energy and expand rapidly in volume, so that the gas-phase cooling medium fills the entire cavity. When entering a relatively cold area, the gas-phase cooling medium will condense, through which the heat accumulated during evaporation will be released. The condensed coolant will return to the evaporation area through the micro-structured capillary channels. Thus, heat dissipation may be achieved.

However, the gas-phase cooling medium may be unevenly dispersed in the cavity and there may be less gas-phase cooling medium in some areas, which will affect the heat spread effect, so that there may still be large temperature difference between cells of the battery pack.

### SUMMARY

According to some embodiments of the present application, a heat spreader includes a first plate, a second plate and a plurality of protrusions. The first plate is configured to fit against at least one side surface of a cell. The second plate is hermetically connected to the first plate to form an enclosed space filled with a liquid medium. The protrusions are disposed between the first plate and the second plate and dispersedly arranged in the enclosed space. The protrusions include a plurality of protrusion groups, and each of the protrusion groups includes ones of the protrusions sequentially arranged at intervals in a first direction. Two parts of the protrusions respectively belonging to two adjacent protrusion groups are at least partially staggered in a second direction different from the first direction.

According to some embodiments of the present application, a battery includes a cell and the above heat spreader.

According to some embodiments of the present application, a battery pack includes the above battery.

### BRIEF DESCRIPTION OF THE DRAWINGS

FIG. 1 is an axonometric drawing of a heat spreader according to some embodiments of the present application.
FIG. 2 is another axonometric drawing of a heat spreader according to some embodiments of the present application.
FIG. 3 schematically shows part of a heat spreader according to some embodiments of the present application.
FIG. 4 is a cross-sectional view of a heat spreader according to some embodiments of the present application.
FIG. 5 is an enlarged view of part A in FIG. 4.
FIG. 6 is an enlarged view of part B in FIG. 4.
FIG. 7 is a stereoscopic view of part of a second plate of a heat spreader according to some embodiments of the present application.
FIG. 8 is an exploded view of a first structure of a battery according to some embodiments of the present application.
FIG. 9 is an exploded view of a second structure of a battery according to some embodiments of the present application.
FIG. 10 is an exploded view of a third structure of a battery according to some embodiments of the present application.
FIG. 11 is an exploded view of a fourth structure of a battery according to some embodiments of the present application.
FIG. 12 is an exploded view of a fifth structure of a battery according to some embodiments of the present application.

### DETAILED DESCRIPTION

Some embodiments of the present application will be described in detail below with reference to the accompanying drawings. The embodiments are described for illustrative purposes only and are not intended to limit the present application.

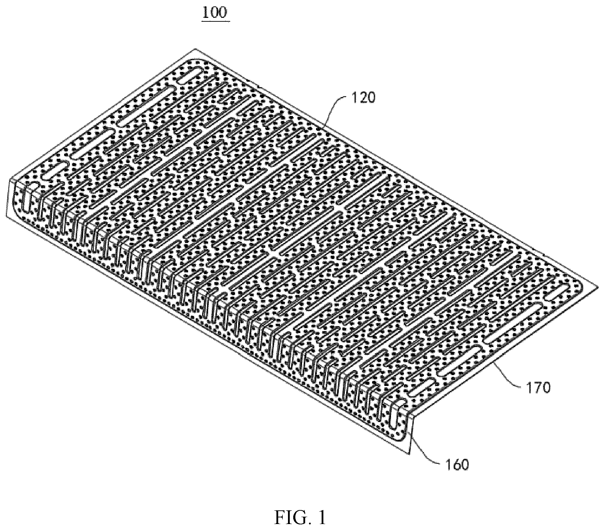

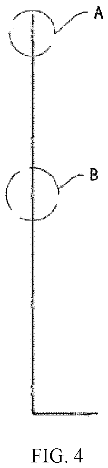

As shown in FIG. 1, FIG. 2, FIG. 4, FIG. 5 and FIG. 6, a heat spreader 100 includes a first plate 110, a second plate 120 and a plurality of protrusions 140 according to some embodiments of the present application. The first plate 110 and the second plate 120 are made of metal materials, such as copper, aluminum, stainless steel or metal compounds. The first plate 110 is configured to fit against at least one side surface of the cell 200. The second plate 120 and the first plate 110 are hermetically connected to each other to form an enclosed space 130, and the enclosed space 130 is filled with a liquid medium. The protrusions 140 are connected between the first plate 110 and the second plate 120 and dispersedly arranged in the enclosed space 130. The enclosed space 130 is provided with a capillary structure. In a first direction, a plurality of protrusions 140 are sequentially arranged at intervals to constitute a protrusion group 145. In a second direction perpendicular to the first direction, a plurality of protrusion groups 145 are sequentially arranged at intervals. two parts of the protrusions 140 respectively belonging to two adjacent protrusion groups 145 are at least partially staggered in the second direction. The first direction may be a width direction of the heat spreader 100, the second direction may be a length direction of the heat spreader 100, and a direction perpendicular to the first and second direction may be a thickness direction of the heat spreader 100. The gap between the first plate 110 and the second plate 120 in the area where the protrusions 140 are not provided is relatively large, which facilitates the flow of gas-phase cooling medium. While the gas-phase cooling medium flows between two adjacent protrusion groups 145, part of the cooling medium flows through the area between two adjacent protrusions 140 in the protrusion group 145, and part of the gas-phase cooling medium flows at positions of the protrusions 140.

In the above embodiments of the present application, between two adjacent protrusion groups 145, the gap between the first plate 110 and the second plate 120 is larger, the gas-phase cooling medium flows faster, and so that the cooling effect is better. The gas-phase cooling medium flows and diverges from the area between the adjacent protrusions 140 in the protrusion group 145. As the protrusions 140 in the two adjacent protrusion groups 145 are at least partially staggered in the first direction, the gas-phase cooling medium diverging from the area between the two adjacent protrusion groups 145 diverges and flows at different positions on both sides, which facilitates the gas-phase cooling medium covering the entire heat spreader 100 and improving the heat spread effect of the heat spreader 100. In addition, the protrusions 140 support the first plate 110 and the second plate 120, thereby reducing the probability of damage to the heat spreader 100 due to extrusion deformation, improving the structural strength of the heat spreader 100, and making the heat spreader 100 less likely to bulge or collapse.

In some embodiments, in the second direction (the thickness direction of the heat spreader 100), an orthographic projection of a protrusion 140 in a protrusion group 145 on an adjacent protrusion group 145 is located at the area between two adjacent protrusions 140 of the adjacent protrusion group 145.

As an example, each protrusion group 145 includes a plurality of protrusions 140, i.e., a first protrusion, a second protrusion, ..., and a N-th protrusion sequentially arranged at intervals in the first direction, where N is a positive integer greater than 2. A plurality of protrusion groups 145, i.e., a first protrusion group, a second protrusion group, ..., and a N-th protrusion group, are sequentially arranged at intervals in the second direction. The j-th protrusion of the i-th protrusion group is arranged opposite to an area between the k-th protrusion and the (k+1)-th protrusion of the (i+1)-th protrusion group, where each of i, j and k is a positive integer that is greater than or equal to 1 and less than N.

In the above example, part of the gas-phase cooling medium may flow between the i-th protrusion group and the (i+1)-th protrusion group, part of the cooling medium may flow through the area between the j-th protrusion and the (j+1)-th protrusion of the i-th protrusion group, and part of the cooling medium may flow through the area between the k-th protrusion and the (k+1)-th protrusion of the (i+1)-th protrusion group. Thus, the gas-phase cooling medium can staggeredly flow to both sides and be dispersed in a tree shape within a large circulation range to cover the entire surface of the heat spreader 100, thereby improving the heat spread effect of the heat spreader 100.

In some embodiments, in the second direction, an orthographic projection of a protrusion 140 in a protrusion group 145 on an adjacent protrusion group 145 covers at least the area between two adjacent protrusions 140 of the adjacent protrusion group 145.

As another example, each protrusion group 145 includes a plurality of protrusions 140, i.e., a first protrusion, a second protrusion, ..., and a N-th protrusion sequentially arranged at intervals in the first direction, where N is a positive integer greater than 2. A plurality of protrusion groups 145, i.e., a first protrusion group, a second protrusion group, ..., and a N-th protrusion group, are sequentially arranged at intervals in the second direction. An end of the j-th protrusion of the i-th protrusion group is arranged opposite to the k-th protrusion of the (i+1)-th protrusion group, and another end of the j-th protrusion of the i-th protrusion group is arranged opposite to the (k+1)-th protrusion of the (i+1)-th protrusion group, where each of i, j and k is a positive integer that is greater than or equal to 1 and less than N.

In the above another example, part of the gas-phase cooling medium may flow between the i-th protrusion group and the (i+1)-th protrusion group, part of the cooling medium may flow through the area between the j-th protrusion and the (j+1)-th protrusion of the i-th protrusion group, and part of the cooling medium may flow through the area between the k-th protrusion and the (k+1)-th protrusion of the (i+1)-th protrusion group. Thus, the gas-phase cooling medium can staggeredly flow to both sides and be dispersed in a tree shape within a large circulation range to cover the entire surface of the heat spreader 100, thereby improving the heat spread effect of the heat spreader 100.

In some embodiments, as shown in FIG. 1, FIG. 5, FIG. 6 and FIG. 7, the second plate 120 is recessed toward the first plate 110 to form the protrusions 140.

For example, the first plate 110 is a flat plate structure, and the protrusion 140 is disposed on the second plate 120. The second plate 120 is recessed toward the first plate 110 to form the protrusion 140. The first plate 110 has a large contact area with the cell 200, and the heat spread effect is better. The second plate 120 is recessed to form the protrusion 140, and the second plate 120 and the protrusion 140 are an integral structure. The second plate 120 and the first plate 110 are assembled to complete the processing of the heat spreader 100 which is simple. The second plate 120 and the protrusion 140 of the integral structure have good sealing performance.

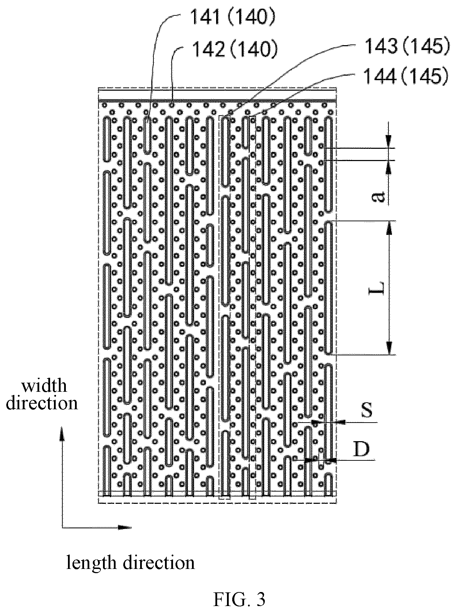

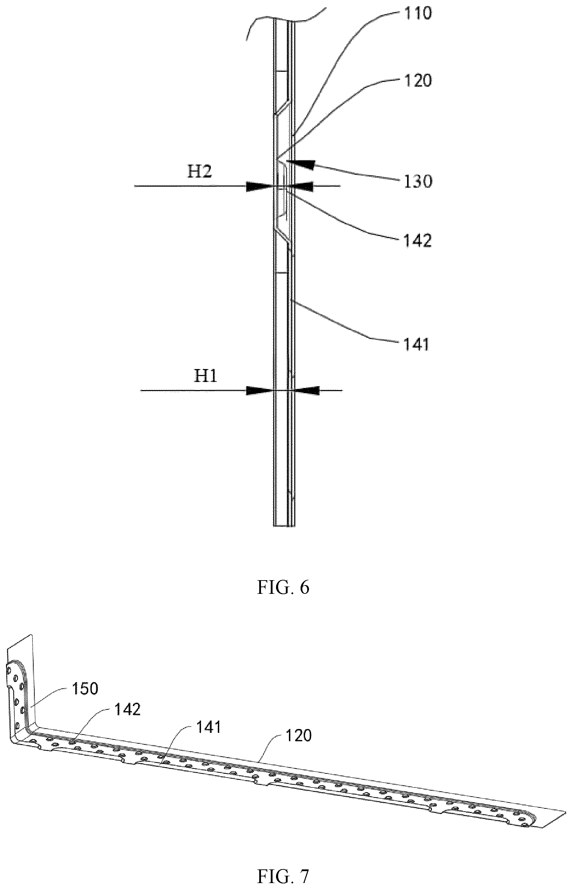

In some embodiments, as shown in FIG. 3 and FIG. 7, the protrusions 140 include a plurality of first protrusions 141. In a top view, each of the first protrusions 141 is in a shape of an elongated strip and extends in a first direction. The first protrusions 141 are arranged at intervals in the first direction to form a first protrusion group 143. A plurality of first protrusion groups 143 are arranged at intervals in the second direction. The first protrusions 141 of two adjacent first protrusion groups are at least partially staggered.

In the above embodiments of the present application, the first protrusion 141 is in the shape of an elongated strip with a large supporting area, and has a good supporting effect. As the first protrusion 141 is in the shape of an elongated strip, the intervals between the first protrusions 141 in the first protrusion group 143 are small, which facilitates increasing the flow velocity of the gas-phase cooling medium in the area between two adjacent first protrusion groups 143 and improving the heat spread effect.

In some embodiments, the protrusions 140 further include a plurality of second protrusions 142 arranged at intervals in the first direction to form a second protrusion group 144. The second protrusion group 144 is located between two first protrusion groups 143. For example, a second protrusion group 144 is arranged between every two adjacent first protrusion groups 143. Alternatively, a second protrusion group 144 is arranged between some two adjacent first protrusion groups 143, and no second protrusion group 144 is arranged between other two adjacent first protrusion groups 143. In the second direction, a plurality of second protrusion groups 144 are arranged at intervals. The second protrusions 142 of two adjacent second protrusion groups 144 are at least partially staggered. For example, adjacent second protrusions 142 in two adjacent second protrusion groups 144 are staggered.

In the above embodiments of the present application, a second protrusion group 144 is disposed in the area between the two adjacent first protrusion groups 143. The first plate 110 and the second plate 120 are supported by the second protrusion groups 144, thereby improving the structural strength of the first plate 110 and the second plate 120, and reducing the probability of bulging deformation or collapse deformation of the heat spreader 100. The channel between the second protrusion groups 144 facilitates the circulation of the gas-phase cooling medium, dispersing the gas-phase cooling medium, and improving the heat spread effect.

In some embodiments, as shown in FIG. 3 and FIG. 7, the second protrusion 142 has a different shape from the first protrusion 141 in a top view.

In the above embodiments of the present application, the protrusions 140 include second protrusions 142 and first protrusions 141 of different shapes, which are reasonably dispersed in the enclosed space 130, and the space is reasonably utilized to improve the support effect. The first protrusion 141 and the second protrusion 142 have different shapes in a top view, such as the first protrusion 141 is in the shape of an elongated strip, and the second protrusion 142 is in the shape of a circle. The gas-phase cooling medium flows fast between the first protrusion groups 143, and there are more lateral dispersion channels in the second protrusion group 144, which facilitates the gas-phase cooling medium to diverge across the plane and cover the entire heat spreader 100. The first protrusion 141 and the second protrusion 142 take into account both of the flow speed and divergence requirements of the gas-phase cooling medium, and also improve the support effect.

In some embodiments, as shown in FIG. 3 and FIG. 7, the second protrusion 142 is in the shape of a circle in the top view.

In the above embodiments of the present application, each the first protrusion 141 is in the shape of an elongated strip, with a large supporting area and a good supporting effect. However, the first protrusion 141 occupies a large area and cannot cover a large area. The second protrusions 142 are arranged in the area between the first protrusions 141. The second protrusions 142 are combined with the first protrusions 141 to take into account the flow speed and divergence requirements of the gas-phase cooling medium, with a large laying area, high structural strength and a good supporting effect.

In some embodiments, as shown in FIG. 3, a distance between two adjacent second protrusions 142 in the second protrusion group 144 is a, where a=8 mm.

In some embodiments, as shown in FIG. 3, the first protrusion 141 extends in a width direction of the second plate 120. The first protrusions 141 are arranged at intervals in the width direction of the second plate 120 to form a first protrusion group 143, and the first protrusion groups 143 are arranged at intervals in a length direction of the second plate 120.

In the above embodiments of the present application, the first protrusions 141 are neatly arranged into a first protrusion group 143, which facilitates processing thereof.

In some embodiments, as shown in FIG. 3, the first protrusions 141 of two adjacent first protrusion groups 143 are staggered in the length direction of the second plate 120. It can be understood that in the length direction of the second plate 120, the orthographic projection of the first projection 141 of the first protrusion group 143 on an adjacent first protrusion group 143 cover opposite ends of two adjacent first protrusions 141 in the adjacent first protrusion group 143. The first protrusions 141 have a wide supporting range and a good supporting effect.

In some embodiments, the second protrusion group 144 includes a plurality of second protrusions 142 arranged at intervals in the first direction to form the second protrusion group 144. In a second direction, the second protrusion groups 144 are arranged at intervals. At least one first protrusion 141 is arranged between two adjacent second protrusion groups 144 and extends in the first direction. Reasonable use of the gaps between the second protrusion groups 144 increases the channels for the gas-phase cooling medium to flow, which facilitates the flow of the gas-phase cooling medium, increasing the support range and improving the support effect.

In some embodiments, as shown in FIG. 3, a plurality of second protrusions 142 are provided between the first protrusion group 143 and an edge of the second plate 120. For example, at least one second protrusion 142 is provided between an end of the first protrusion group 143 at the edge and the edge of the second plate 120. The second protrusions 142 are reasonably arranged to increase the support range and improve the support effect.

In some embodiments, as shown in FIG. 3, the first protrusion 141 has a length L, where 10 mm ≤ L ≤ 60 mm. The value of L may be 10 mm, 20 mm, 30 mm, 40 mm, 45 mm, 50 mm, 60 mm, or other unspecified values. For example, the lengths of the first protrusions 141 within the same first protrusion group 143 may vary or be the same.

In some embodiments, as shown in FIG. 3, the first protrusion 141 has a width S, where 1.5 mm ≤ S ≤ 6 mm. The value of S may be 1.5 mm, 2.0 mm, 3.0 mm, 4.0 mm, 4.5 mm, 5.0 mm, 6.0 mm, or other unspecified values. For example, all first protrusions 141 may have the same width, or the first protrusions 141 within the same first protrusion group 143 may have the same width and the first protrusions 141 in different first protrusion groups 143 may have different widths.

In some embodiments, as shown in FIG. 6, the first protrusion 141 has a height H1, where 0.3 mm ≤ H1 ≤ 0.6 mm. The value of H1 may be 0.3 mm, 0.4 mm, 0.5 mm, 0.6 mm, or other unspecified values. For example, all first protrusions 141 may have the same height, or the first protrusions 141 within the same first protrusion group 143 may have the same height and the first protrusions 141 in different first protrusion groups 143 have different heights.

In some embodiments, as shown in FIG. 3, the second protrusion 142 is a circle in the top view with a diameter D, where D=2.5 mm.

In some embodiments, as shown in FIG. 6, the second protrusion 142 has a height H2, where 0.3 mm ≤ H2 ≤ 0.6 mm. The value of H2 may be 0.3 mm, 0.4 mm, 0.45 mm, 0.5 mm, 0.6 mm, or other unspecified values. For example, all second protrusions 142 may have the same height, or the second protrusions 142 within the same second protrusion group 144 may have the same height, and the second protrusions 142 in different second protrusion groups 144 may have different heights.

In some embodiments, a ratio of an effective space in the enclosed space 130 to the enclosed space 130 is Q, where 0.6≤Q≤0.75. The value of Q can be 0.6, 0.65, 0.68, 0.72, 0.75 or other unspecified values. It can be understood that the protrusions 140 occupies a certain space in the enclosed space 130, and the effective space refers to a portion of the enclosed space 130 excluding the space occupied by the protrusions 140.

In the above embodiments of the present application, the effective space of the enclosed space 130 is reasonably configured to meet the heat spread requirement while taking into account the structural strength.

In some embodiments, the first plate 110 and the second plate 120 are formed by stamping, which is simple and facilitates the processing of the first plate 110 and the second plate 120.

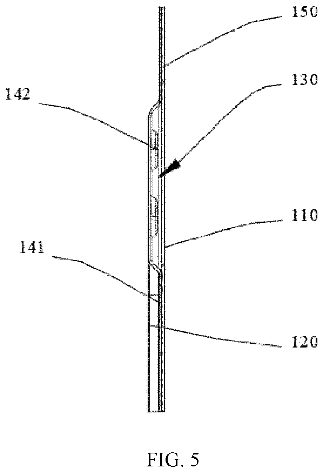

In some embodiments, as shown in FIG. 5 and FIG. 7, a flange portion 150 protruding toward the first plate 110 is provided at the peripheral edge of the second plate 120, and is welded to the first plate 110, so as to facilitate the assembly of the first plate 110 and the second plate 120.

In some embodiments, portions of the first plate 110 and the second plate 120 are welded at the positions of the first protrusions 141. Therefore, the heat spreader 100 meets the baking requirements of the cell manufacturing process and is not easy to expand, meets the extrusion requirements of the heat spreader 100 due to the expansion of the cell, and also meets the transmission of gas and liquid inside the heat spreader 100, thereby realizing the function of the heat spreader 100.

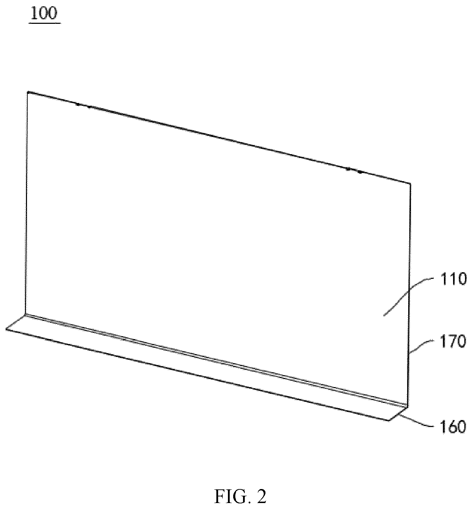

In some embodiments, as shown in FIG. 1 and FIG. 2, the heat spreader 100 includes a horizontal portion 160 and a vertical portion 170 which are connected at an angle. The horizontal portion 160 is configured to fit with the bottom surface of the cell 200, and the vertical portion 170 is configured to fit with a side surface of the cell 200. The angle between the horizontal portion 160 and the vertical portion 170 is β, where 90° ≤β≤ 100°. The heat spreader 100 is provided with the horizontal portion 160 and the vertical portion 170, the horizontal portion 160 fits with the bottom surface of the cell 200, and the vertical portion 170 fits with the side surface of the cell 200, so that a large contact area between the heat spreader 100 and the cell 200 is achieved, and the heat spread effect is improved.

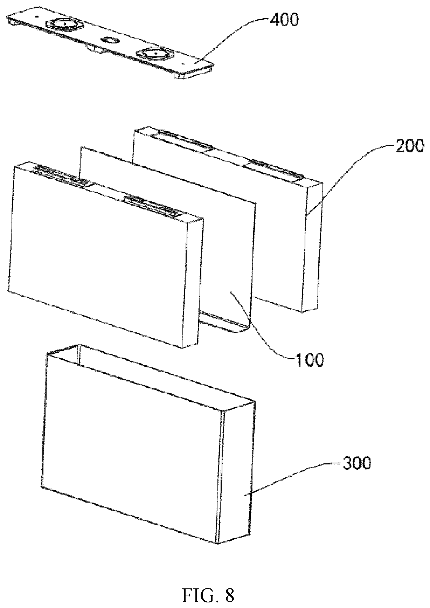

As shown in FIG. 8 to FIG. 11, according to some embodiments of the present application, a battery includes the heat spreader 100 and a cell 200 fitted with the first plate 110. The battery in the present embodiments may achieve the same technical effect as that of the heat spreader 100, which will not be described here in detail.

As shown in FIG. 8 to FIG. 11, the battery further includes a housing 300 and a cover plate 400 configured to cover on the housing 300 to form a accommodating space where the cell 200 and the heat spreader 100 are accommodated. In some embodiments, two cells 200 are disposed in the housing 300.

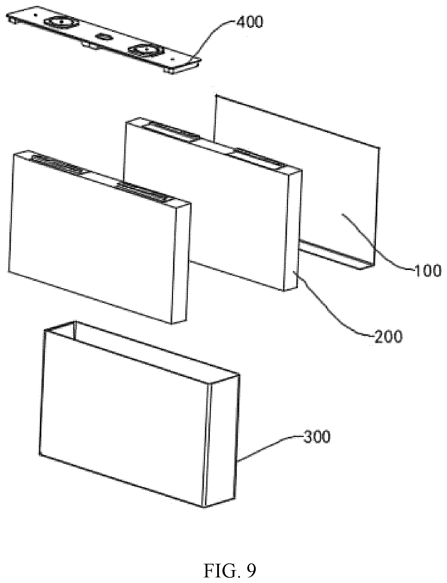

In some embodiments, as shown in FIG. 8 and FIG. 9, a heat spreader 100 is provided between the two cells 200.

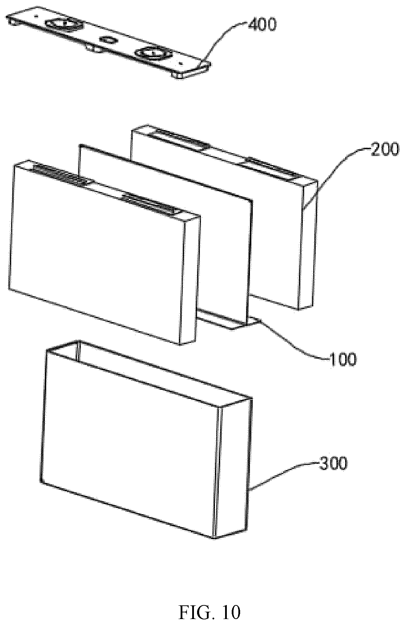

In some embodiments, as shown in FIG. 10, two heat spreaders 100 are provided between the two cells 200, where one heat spreader 100 is fits with one of the two cells 200, and another heat spreader 100 is fits with another one of the two cell 200. The horizontal portions 160 of the two heat spreaders 100 are arranged back-to-back.

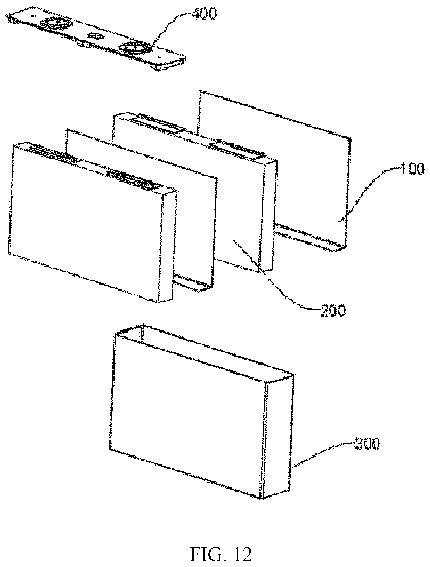

In some embodiments, as shown in FIG. 12, two heat spreaders 100 are provided, where one heat spreader 100 is arranged outside the two cell 200, and another heat spreader 100 is provided between the two cells 200. The two heat spreaders 100 are arranged in parallel.

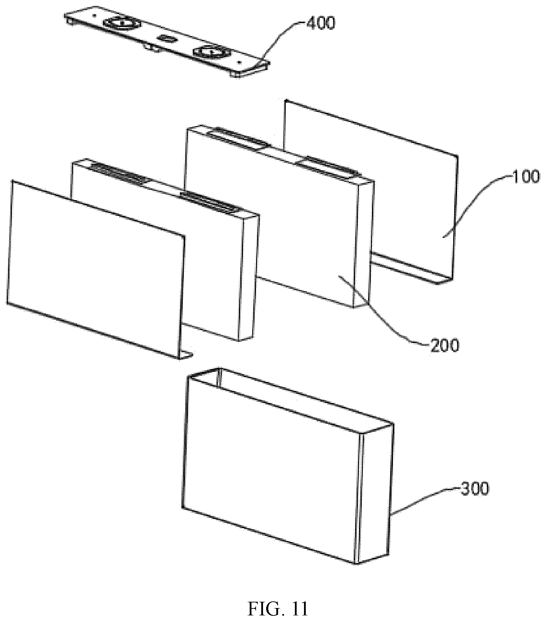

In some embodiments, as shown in FIG. 11, two heat spreaders 100 are provided, where one heat spreader 100 is provided outside one of the two cell 200, and another heat spreader 100 is provided outside another one of the two cell 200. The two heat spreaders 100 are provided opposite to each other.

In some embodiments of the present application, it is provides a battery pack including the above-mentioned battery. The battery pack in the present embodiments may achieve the same technical effect as that of the above-mentioned heat spreader 100, which will not be described here in detail.

Some embodiments of the present application have been described in detail above. The embodiments are described for illustrative purposes only and are not intended to limit the present application. Many modifications or equivalent substitutions with respect to the embodiments may occur to those of ordinary skill in the art based on the present application and thus shall fall within the scope of the present application.

## Claims

1. A heat spreader (100), comprising:
a first plate (110) configured to fit against at least one side surface of a cell (200);
a second plate (120) hermetically connected to the first plate (110) to form an enclosed space (130), wherein the enclosed space (130) is filled with a liquid medium; and
a plurality of protrusions (140) disposed between the first plate (110) and the second plate (120) and dispersedly arranged in the enclosed space (130), wherein the protrusions (140) comprise a plurality of protrusion groups (145), each of the protrusion groups (145) comprises ones of the protrusions (140) sequentially arranged at intervals in a first direction, and two parts of the protrusions (140) respectively belonging to two adjacent ones of the protrusion groups (145) are at least partially staggered in a second direction different from the first direction.

2. The heat spreader (100) according to claim 1, wherein the second plate (120) is recessed toward the first plate (110) to form the protrusions (140).

3. The heat spreader (100) according to claim 1 or 2, wherein the second direction is perpendicular to the first direction; and
in the second direction, an orthographic projection of one of the protrusions (140) belonging to one of the two adjacent ones of the protrusion groups (145) on another one of the two adjacent ones of the protrusion groups (145) is located at an area between two adjacent ones of the protrusions (140) belonging to the another one of the two adjacent ones of the protrusion groups (145).

4. The heat spreader (100) according to claim 1 or 2, wherein the second direction is perpendicular to the first direction; and
in the second direction, an orthographic projection of one of the protrusions (140) belonging to one of the two adjacent ones of the protrusion groups (145) on another one of the two adjacent ones of the protrusion groups (145) at least covers an area between two adjacent ones of the protrusions (140) belonging to the another one of the two adjacent ones of the protrusion groups (145).

5. The heat spreader (100) according to any one of claims 1-4, wherein the protrusions (140) comprise a plurality of first protrusions (141) and a plurality of second protrusions (142);
the second protrusions (142) comprise a plurality of second protrusion groups (144), and each of the second protrusion groups (144) comprises ones of the second protrusions (142) arranged at intervals in the first direction; and
at least one of the first protrusions (141) is arranged between two adjacent ones of the second protrusion groups (144) to extend in the first direction.

6. The heat spreader (100) according to any one of claims 1-4, wherein the protrusions (140) comprise a plurality of first protrusions (141) each extending in the first direction, and an orthographic projection of each of the first protrusions (141) on the second plate (120) has an elongated strip shape; and
the first protrusions (141) comprise a plurality of first protrusion groups (143), each of the first protrusion groups (143) comprises ones of the first protrusions (141) arranged at intervals in the first direction, and two parts of the first protrusions (141) respectively belonging to two adjacent ones of the first protrusion groups (143) are at least partially staggered in the second direction.

7. The heat spreader (100) according to claim 6, wherein the protrusions (140) further comprise a plurality of second protrusions (142), the second protrusions (142) comprise a plurality of second protrusion groups (144), and each of the second protrusion groups (144) comprises ones of the second protrusions (142) arranged at intervals in the first direction;
one of the second protrusion groups (144) is located between two of the first protrusion groups (143); and
two parts of the second protrusions (142) respectively belonging to two adjacent ones of the second protrusion groups (144) are at least partially staggered in the second direction.

8. The heat spreader (100) according to claim 5 or 7, wherein each of the first protrusions (141) has a shape different from a shape of any of the second protrusions (142).

9. The heat spreader (100) according to any one of claims 5 and 7-8, wherein at least one of the second protrusion groups (144) is disposed between every two of the first protrusion groups (143).

10. The heat spreader (100) according to any one of claims 5 and 7-9, wherein ones of the second protrusions (142) are arranged between one of the first protrusion groups (143) and an edge of the second plate (120).

11. The heat spreader (100) according to any one of claims 5-10, wherein the first plate (110) is welded to the second plate (120) at a position of at least one of the first protrusions (141); and/or
a periphery of the first plate (110) is welded to a periphery of the second plate (120).

12. The heat spreader (100) according to any one of claims 1-11, wherein a periphery of the second plate (120) is provided with a flange portion (150) protruding toward the first plate (110), and the flange portion (150) is welded to the first plate (110).

13. A battery, comprising:
at least one cell (200); and
at least one heat spreader (100) according to any one of claims 1-12,
wherein the first plate (110) of each of the at least one heat spreader (100) fits against one of the at least one cell (200).

14. The battery according to claim 13, wherein the at least one cell (200) comprises two cells (200), and the at least one heat spreader (100) comprises one heat spreader (100) arranged between the two cells (200); or
the at least one cell (200) comprises two cells (200), and the at least one heat spreader (100) comprises two heat spreaders (100) arranged between the two cells (200) to respectively fit against the two cells (200); or
the at least one cell (200) comprises two cells (200), the at least one heat spreader (100) comprises two heat spreaders (100), one of the two heat spreaders (100) is arranged outside the two cells (200), and another one of the two heat spreaders (100) is arranged between the two cells (200); or
the at least one cell (200) comprises two cells (200), the at least one heat spreader (100) comprises two heat spreaders (100), and the two cells (200) are arranged between the two heat spreaders (100).

15. A battery pack, comprising the battery according to claim 13 or 14.
